# EUROPEAN PATENT SPECIFICATION

(11) **EP 0 350 458 B1**
(45) Date of publication and mention of the grant of the patent: **12.05.1993**
(21) Application number: 89830273.2
(22) Date of filing: 20.06.1989
(51) Int. Cl.: B60N 2/16, B60N 2/06

(54) **A vehicle seat, particularly for motor cars**
Fahrzeugsitz, insbesondere für Kraftfahrzeuge
Siège de véhicule, en particulier pour automobile

(30) Priority: 01.07.1988 IT 6762088
(43) Date of publication of application: 10.01.1990
(73) Proprietor: FIAT AUTO S.p.A., 10135 Torino (IT)
(72) Inventor: Dal Monte, Antonio, I-00196 Roma (IT)
(74) Representative: Bosotti, Luciano

(56) References cited:
- EP-A- 0 154 582
- DE-A- 2 713 693
- FR-A- 1 593 281
- FR-A- 2 429 125
- FR-A- 2 433 433
- GB-A- 569 532
- GB-A- 1 208 051
- US-A- 3 700 203

## Description

The present invention relates to vehicle seats and more specifically concerns a seat comprising:
- means for guiding the adjustment of the seat in a forward-backward direction relative to the floor of the passenger compartment of the vehicle,
- a squab with associated pivoted-arm support means which can impart a general movement of vertical displacement to the squab as a result of a translational movement in a forward-backward direction relative to the floor of the passenger compartment of the vehicle,
- a backrest projecting from the rear region of the squab.

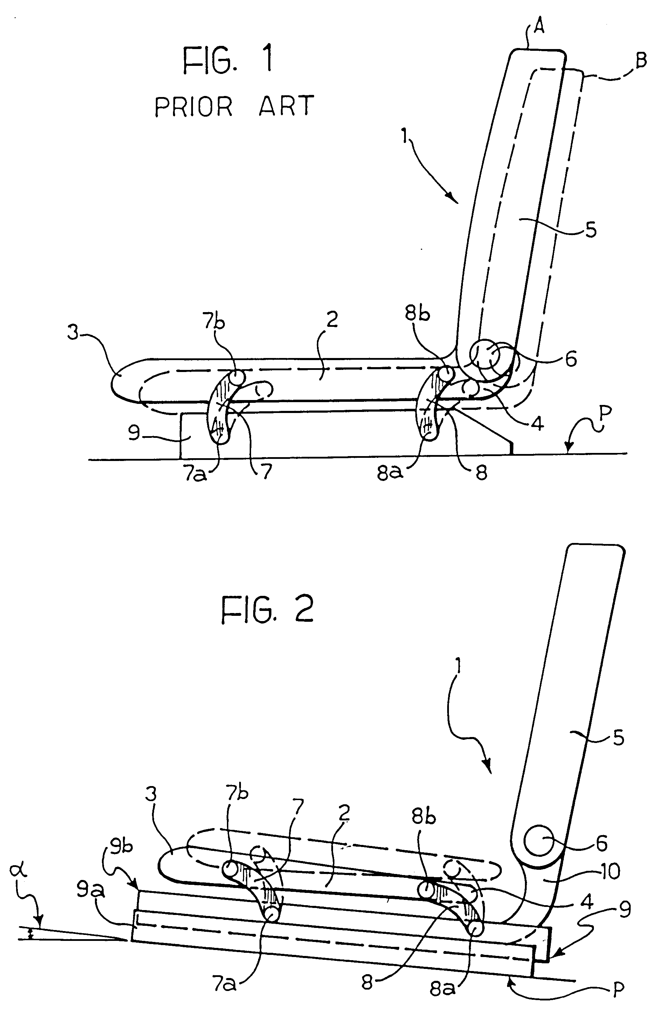

A seat of this type is illustrated schematically in Figure 1 of the appended drawings, with reference to the prior art.

In this Figure a motor-vehicle seat (for example one of the front seats of a motor car) is generally indicated 1 and consists essentially of a sitting surface or "squab" 2 (in which a front region 3 and a rear region 4 can be distinguished), together with a backrest 5 which projects upwardly from the rear part 4 of the squab 2. The backrest 5 is connected to the squab by means of a pivoting mechanism 6 which allows the selective variation of the amplitude of the dihedron defined by the squab 2 and the backrest 5, in other words the inclination of the backrest 5 relative to the squab 2.

The squab 1 is supported on the floor P of the passenger compartment of the motor vehicle (not illustrated in its entirety) by a system of pivoting arms comprising, on each side of the seat 1:
a first arm 7, which supports the front region 3 of the squab 2, and
a second arm 8 which supports the rear region 4 of the squab 2.

For terminological exactitude, it should be remembered that, in the present description and in the claims which follow, the terms front region and rear region are to be understood in terms of the normal direction of travel of the vehicle in which the seat is fitted and should not be understood as referring in a limiting manner to the end edges of the squab 2: instead they relate generally to the portions of the squab 2 between the respective end edge and the central or intermediate region of the squab 2.

In Figure 1, as in the rest of the appended drawings, only the two arms 7 and 8 which are located on one side (specifically the left side) of the seat 1 are visible. Naturally, it is understood that there is, in general, an entirely similar arrangement of arms on the opposite side of the seat 1.

In the drawings the ends of the arms 7 and 8 which face the floor P and the squab 2 are indicated 7a, 8a, and 7b, 8b respectively.

The upper ends 7b, 8b are articulated directly to the body of the squab. The lower ends 7a, 8a, however, are articulated to supports mounted slidably on longitudinal guides 9 provided on the floor P and extending generally horizontally.

The kinematic mechanism connecting the squab 2 (and the seat 1 as a whole) to the floor P is therefore essentially comparable to an articulated parallelogram which enables the seat 1 to be displaced, for example, between the position illustrated in continuous outline at A in Figure 1 and the position illustrated in broken outline at B in the same Figure 1, by the pivoting of the arms 7, 8 (by known means, not illustrated). It is thus possible to vary simultaneously the longitudinal position and the height of the seat 1 within the passenger compartment of the motor vehicle.

In general, forward displacement of the seat 1 (which tends to be required by drivers of small stature) causes the raising of the seat 1. Rearward displacement, however (which tends to, be required by drivers of larger stature), causes lowering of the seat 1 as a whole.

In previous patent documents,in the name of the same Applicants (see for example Italian utility model No. 206418) it has already been proposed to impart a differentiated adjusting movement to the squab and to the backrest in order to adapt the useful length of the squab to the length of the limbs of persons of different stature, the relative height of the backrest and the squab also being modified so as to achieve the best possible adaptation to individuals of different sizes.

More specifically, the present invention relates to a seat having the features set forth in the pre-characterising portion of Claim 1, which is known, e.g. from EP-A- 0 154 582. Also DE-A- 2 713 693 is of interest for the invention.

The object of the present invention is to provide a seat which can achieve the same results without requiring substantial modification of a seat structure of the type indicated in the foregoing, especially as illustrated above with reference to Figure 1.

According to the present invention, this object is achieved by virtue of a vehicle seat having the further features set forth in Claim 1.

The invention will now be described, purely by way of non-limiting example, with reference to the appended drawings, in which:
Figure 1, already described above, relates to the prior art, and
Figure 2 shows the structure of a seat according to the invention schematically.

The elements already described above with reference to the prior art (or elements functionally equivalent thereto) are indicated in Figure 2 by the same reference numerals as used in Figure 1.

In Figure 2 a sliding-guide assembly fitted to the floor P of the passenger compartment of the motor vehicle is generally indicated 9. In general, and according to a known solution, the assembly in question comprises, on each side of the seat 1, a straight track (or guide proper) 9a which is fixed to the floor P in a forward-backward orientation relative to the passenger compartment of the motor vehicle, and a support or slide 9b which slides along the track 9a and to which the lower ends 7a, 8a of the arms 7 and 8 are articulated.

An important characteristic of the solution according to the invention is the fact that the guides 9 are mounted on the floor P in positions which are not generally horizontal (as in the case of the known seat of Figure 1), but in an inclined position, with their front ends located higher than their rear ends.

As already stated, the terms "front" and "rear" refer to the normal direction of travel of the vehicle in which the seat 1 is fitted.

As regards the degree of inclination of the guides 9 to the horizontal, a choice which is thought to be preferable but not limiting, is an inclination (α) in the region of about 5 degrees.

The backrest 5 is provided at its lower end, with a support assembly (for example a pair of brackets 10 which are located on the two sides of the seat 1, and only one of which is visible in the drawings) mounted on the sliding parts or slides 9b of the guide assembly 9. A forwards-backwards adjusting movement relative to the passenger compartment of the motor vehicle can thus be imparted to the backrest 5. This movement does not, however, involve any displacement of the pivoted arms 7 and 8 which support the squab.

Naturally, the pivoting mechanism 6 which enables the inclination of the backrest 5 to be varied selectively relative to the squab 2 is interposed between the brackets 10 and the backrest 5 itself in the seat according to the invention.

In other words, if an imaginary comparison is made between the solutions illustrated in Figures 1 (prior art) and 2, it can be seen that, in the seat 1 according to the invention, the squab assembly 2 has, so to speak, been "separated" from the structure of the seat 1 itself, so that an adjusting movement can be imparted thereto which does not necessarily involve a corresponding movement of the backrest 5.

Moreover, in the seat according to the invention, the position of mounting of the pivoted arms 7 has, so to speak, been reversed with respect to the mounting position illustrated in Figure 1.

In the solution of Figure 1 (indicative of the prior art) the arms 7 and 8 in fact have generally arcuate shapes, with their concavities facing towards the rear end of the squab 2, and a mounting position such that the arms 7 and 8 reach approximately vertical positions as a result of a forward pivoting movement caused by the forward movement of the squab 2.

In the solution according to the invention, however, the arms 7 and 8 have their concavities facing the front end of the squab 2 and reach their approximately vertical positions as a result of backward pivoting caused by the backward movement of the squab 2.

In other words, in the seat (1) according to the prior art, the squab 2 is raised when the seat 1 is displaced forwards and lowered when the seat is moved backwards.

In the seat (1) according to the invention, however, forward movement of the squab 2 relative to the backrest 5 (which, not being connected either to the arms 7, 8 or to the squab, remains fixed) causes lowering of the squab 2 relative to the floor P of the passenger compartment, whilst backward movement causes raising of the squab 2.

In a complementary manner, in the seat according to the invention, when the squab 2 is lowered for adaptation to a person of large stature, the useful length of the squab 2 itself is lengthened. It is thus better adapted to the thighs of the user (which are obviously presumed to be of greater than average length), thus avoiding the so-called "raised-limb" phenomenon.

A person of small stature, on the other hand, will wish to raise his line of sight by raising the squab 2, thus (as a result of the backward pivoting caused by the pivoting of the arms 7 and 8) reducing the useful length of the squab, and, again in this case, achieving better adaptation to the shorter length of the user's thighs.

In the case of the driver of the vehicle, in carrying out this manoeuvre, a person of small stature will be moved away from the steering wheel and from the pedals: however, by sliding the whole of the seat 1 forwards on the guides 9, he will immediately be able to regain the correct driving position.

It should also be noted that, during the adjustment associated with the pivoting of the arms 7 and 8, the squab 2 is raised or lowered with respect to the backrest 5 so that the latter is better adapted to the shape of the user's back.

The variability of the height of the backrest 5 relative to the top of the squab 2 not only improves its holding of the backs of different-sized drivers, but also makes its meeting with the headrest (not shown here) more rational since the position (in height) of the head of a tall person and of a small person will be approximately the same. In fact the head thus "projects" above the top of the backrest 5 by a distance which is practically identical for all persons.

## Claims

1. A vehicle seat, comprising:
- means (9) for guiding the adjustment of the seat (1) in a forward-backward direction relative to the floor (P) of the passenger compartment of the vehicle,
- a squab (2) with associated pivoted-arm support means (7, 8) which can impart a general movement of vertical displacement to the squab (2) as a result of translational movement in a forward-backward direction relative to the floor (P) of the passenger compartment, the pivoted-arm support means (7, 8) being arranged so that they cause the raising and lowering of the squab (2) when it is moved translationally backwards and forwards respectively relative to the floor (P) of the passenger compartment; and
- a backrest (5) projecting from the rear region (4) of the squab (2) the backrest (5) having support members (10) which cooperate with the guide means (9) in order to allow forward-backward adjusting movement of the backrest (5), said pivoted-arm support means (7, 8) being kinematically disconnected from the support members (10) for the backrest (5),
characterised in that:
- the guide means (9) are generally inclined to the horizontal with their front ends higher than their rear ends, and the support means (7, 8) include pivoted arms having a generally-arcuate configuration with their cavities facing forwards.

2. A seat according to Claim 1,
characterised in that it includes first (7) and second (8) pivoted-arm support means which act in correspondence with the front region (3) and with the rear region (4) of the squab (2) respectively.

3. A seat according to Claim 1 or Claim 2, characterised in that a mechanism (6) is interposed between the backrest (5) and the respective support members (10) for selectively varying the orientation of the backrest (5) relative to the floor (P) of the passenger compartment.

4. A seat according to any one of the preceding claims, characterised in that the guide means (9) are inclined to the horizontal at an angle of the order of about 5 degrees.

5. A seat according to any one of the preceding claims, characterised in that the first (7) and the second (8) support means are interposed between the squab (2) and the guides (9).

## Patentansprüche

1. Fahrzeugsitz
mit Führungsmitteln (9) zur Einstellung des Sitzes (1) in Vorwärts-Rückwärts-Richtung relativ zu dem Boden (P) des Fahrgastraums des Fahrzeugs,
mit einem Sitzteil (2) mit zugehörigen Schwenkarm-Haltemitteln (7, 8), die das Sitzteil (2) als Folge einer Translationsbewegung in Vorwärts-Rückwärts-Richtung relativ zu dem Boden (P) des Fahrgastraums mit einer im wesentlichen vertikalen Verschiebungsbewegung beaufschlagen können, wobei diese Schwenkarm-Haltemittel (7, 8) so angeordnet sind, daß sie das Anheben und Absenken des Sitzes (2) bewirken, wenn dieser in einer Translationsbewegung relativ zu dem Boden (P) des Fahrgastraums rückwärts bzw. vorwärts bewegt wird,
sowie mit einer aus der hinteren Zone (4) des Sitzteils (2) hervorstehenden Rückenlehne (5) mit Halteelementen (10), die mit den Führungsmitteln (9) zusammenwirken, um eine Einstellbewegung der Rückenlehne (5) in Vorwärts-Rückwärts-Richtung zu ermöglichen, wobei die Schwenkarm-Haltemittel (7, 8) von den Halte-Elementen (10) für die Rückenlehne (5) kinematisch getrennt sind,
dadurch gekennzeichnet,
daß die Führungsmittel (9) gegenüber der Horizontalen geneigt sind, wobei ihre vorderen Enden höher liegen als ihre hinteren Enden, und daß die Haltemittel (7, 8) Schwenkarme mit im wesentlichen bogenförmiger Gestalt umfassen, deren Hohlseiten nach vorn weisen.

2. Sitz nach Anspruch 1, dadurch gekennzeichnet, daß er erste (7) und zweite (8) Schwenkarm-Haltemittel aufweist, die im Bereich der vorderen Zone (3) bzw. der hinteren Zone (4) des Sitzteils (2) wirksam sind.

3. Sitz nach Anspruch 1 oder 2, dadurch gekennzeichnet, daß zwischen der Rückenlehne (5) und den jeweiligen Haltemitteln (10) ein Mechanismus (6) zur wahlweisen Änderung der Orientierung der Rückenlehne (5) relativ zu dem Boden (P) des Fahrgastraums angeordnet ist.

4. Sitz nach einem der vorherigen Ansprüche, dadurch gekennzeichnet, daß die Führungsmittel (9) gegenüber der Horizontalen um einen Winkel in der Größenordnung von etwa 5° geneigt sind.

5. Sitz nach einem der vorherigen Ansprüche, dadurch gekennzeichnet, daß die ersten (7) und die zweiten (8) Haltemittel zwischen dem Sitzteil (2) und den Führungen (9) angeordnet sind.

## Revendications

1. Siège de véhicule comprenant :
- des moyens (9) servant à guider le réglage du siège (1) dans la direction avant-arrière par rapport au plancher (P) de l'habitacle du véhicule,
- un coussin d'assise (2) muni de moyens supports (7, 8) à bras oscillants associés à ce coussin d'assise, qui peuvent imprimer un mouvement général de déplacement vertical au coussin d'assise (2) sous l'effet d'un mouvement de translation dans la direction avant-arrière par rapport au plancher (P) de l'habitacle, les moyens supports (7, 8) à bras oscillants étant agencés de manière à provoquer l'élévation et l'abaissement du coussin d'assise (2) lorsque ce dernier se déplace en translation vers l'arrière et vers l'avant respectivement par rapport au plancher (P) de l'habitacle ; et
- un dossier (5) qui fait saillie sur la région arrière (4) du coussin d'assise (2), le dossier (5) possédant des éléments supports (10) qui coopèrent avec les moyens de guidage (9) pour permettre un mouvement de réglage avant-arrière du dossier (5), lesdits moyens supports (7, 8) à bras oscillants étant déconnectés cinématiquement des moyens supports (10) qui supportent le dossier (5),
caractérisé en ce que
- les moyens de guidage (9) sont sensiblement inclinés sur l'horizontale, de telle sorte que leurs extrémités soient plus élevées que leurs extrémités arrière, et les moyens supports (7, 8) comprennent des bras oscillants ayant une configuration sensiblement incurvée dont la cavité est dirigée vers l'avant.

2. Siège selon la revendication 1, caractérisé en ce qu'il comprend des premiers (7) et seconds (8) moyens supports à bras oscillants qui agissent respectivement dans la région avant (3) et dans la région arrière (4) du coussin d'assise (2).

3. Siège selon la revendication 1 ou la revendication 2, caractérisé en ce qu'un mécanisme (6) est interposé entre le dossier (5) et les éléments supports respectifs (10) pour faire varier sélectivement l'orientation du dossier (5) par rapport au plancher (P) de l'habitacle.

4. Siège selon une quelconque des revendications précédentes, caractérisé en ce que les moyens de guidage (9) sont inclinés sur l'horizontale d'un angle de l'ordre d'environ 5°.

5. Siège selon une quelconque des revendications précédentes, caractérisé en ce que les premiers (7) et seconds (8) moyens supports sont interposés entre le coussin d'assise (2) et les guides (9).
